# EUROPEAN PATENT APPLICATION

(11) **EP 4 597 306 A1**
(43) Date of publication of application: **06.08.2025**
(21) Application number: 24382088.3
(22) Date of filing: 30.01.2024
(51) Int. Cl.: G06F 8/65, G06F 21/77

(54) **SOFTWARE UPDATES LOGGING ON SECURE ELEMENT**

(71) Applicant: Giesecke+Devrient Mobile Security Germany GmbH, 81677 München (DE)
(72) Inventor: Gifre, Clara, 08820 El Prat de Llobregat (Barcelona) (ES); Patiño, David, 08820 El Prat de Llobregat (Barcelona) (ES); Ruau, Federico, 08820 El Prat de Llobregat (Barcelona) (ES); Amoros, Luis Miguel, 08820 El Prat de Llobregat (Barcelona) (ES); Mesa, Miguel, 08820 El Prat de Llobregat (Barcelona) (ES)
(74) Representative: LKGLOBAL Lorenz & Kopf Patentanwalt Attorney at Law PartG mbB

(57) **Abstract**

The present invention relates to a method and an update agent for managing software updates on a secure element, which secure element comprises an update agent and an operating system. The method comprises following steps performed by the update agent. In a first step, an installation package is received from an external device. The installation package comprises a software image of a software to be updated onto the secure element. In a subsequent step, update-related data is extracted from the installation package. A software update is performed at the secure element based on the received software image, upon which a log stored on the secure element is updated based on the update-related data.

## Description

The present invention relates to managing software updates on a secure element, and, more particularly, to a method and an update agent for logging operating system updates on a secure element.

### BACKGROUND OF THE INVENTION

Recently, mobile devices configured to employ electronic subscriber profiles for communicating on mobile networks have emerged. Such mobile or electronic devices are typically equipped with smart cards containing electronic/embedded Secure Elements (SE). A secure element may exist in one or more of a variety of forms, such as electronic/embedded universal integrated circuit card (eUICCs), a smart secure digital card (smartSD), or a smart mi-croSD card.

A secure element is a tamper resistant element, TRE, that provides a secure memory and execution environment within a smart card/device in which application code and application data can be securely stored and administered. The secure element ensures that access to the data stored on the card is provided only when authorized.

A secure element designed to be used in telecommunication products, such as mobile devices, is configured to store one or more electronic subscriber profiles, in particular electronic/embedded subscriber identification module (eSIM) profiles, that may allow mobile devices to connect to one or more mobile networks. A subscriber profile (e.g., eSIM profile) may be generated by a mobile network operator (MNO) and may be downloaded to a mobile network device. The subscriber profile may then be installed on the secure element of the mobile device and used for communication over a corresponding mobile network by the mobile device.

The specification Global Platform Card Technology Open Firmware Loader, OFL, for Tamper Resistant Element v1.3 (in the following referred by [1]) describes a standardized mechanism for loading firmware (that is, use case dependent data which may contain the operating system, OS, and application data) into a secure element. The OFL defines cryptographic protection based on ECC, the roles involved in firmware loading and the administrative rights for the different operations, enabling thus secure download of firmware into a secure element.

A mobile device can thus automatically install and update an applet or another piece of software, such as an operating system, on a secure element. When an update package containing a software update is received at the secure element, the compatibility between the software update and the software currently loaded within the secure element is checked. If the software update fulfills compatibility requirements it is uploaded onto the secure element, where it replaces the previously loaded version.

The secure element itself does not have any information on any past software updates performed, as it is the off-card device/external device which provides and keeps track of all software updates. If the mobile device, the secure element is embedded on, or other components thereof, would need information on past updates, the mobile device will have to request information on historical updates performed on the secure element from the off-card device. There are no means for the mobile device to obtain this information from the secure element itself.

It is therefore desirable to provide a solution for keeping track of software updates at a secure element, which addresses the above-mentioned drawbacks.

### SUMMARY OF THE INVENTION

The present invention addresses the above object by the subject-matter covered by the independent claims. Preferred embodiments of the invention are defined in the dependent claims.

According to a first aspect of the present invention, there is provided a method for managing software updates on a secure element, which secure element comprises an update agent and an operating system. The method comprises following steps performed by the update agent. In a first step, an installation package is received from an external or off-card device. The installation package comprises a software image of a software to be updated onto the secure element. In a subsequent step, update-related data is extracted from the installation package. A software update is performed at the secure element based on the received software image, upon which a log stored on the secure element is updated based on the update-related data.

According to a second aspect of the present invention, there is provided an update agent for managing software updates on a secure element. The update agent comprises a memory and is being configured to receive from an external device an installation package comprising a software image of a software to be updated onto the secure element, to extract update-related data from the installation package, to perform a software update based on the software image, and to update a log stored in the memory by creating a new log entry based on the update-related data.

Within the context of the present invention, the term software updates refer to any updates of software loaded onto the secure element. This may include, without being restricted to, a new version of an existing operating system, a new operating system, new personalization data, a new version of an applet, etc.

The method proposed herein provides an efficient way for the update agent to keep track of software updates performed at the secure element. The external device (also referred to as off-card entity) is no longer responsible of knowing all the updates that have been performed on a given secure element. This information is stored in the log at the secure element/TRE and can thus be accessed by the mobile device directly from the secure element without requiring setting up a communication session with the external device. The log is a log memory region preferably kept in a non-volatile-memory region of the TRE and is used to store historic of performed updates.

In some embodiments of the present invention, the installation package comprises the software image and certain information indicating the characteristics of the software image itself, the latter being referred to as the manifest. The update-related data comprises a software identifier extracted from the manifest indicative of the software on the secure element to be updated.

This allows to keep track of updates for each piece of software at the secure element.

Preferably, the software identifier is contained both in the manifest and the software to be updated on the secure element. Preferably, each software stored or to be stored in the secure element contains its own software identifier.

In some embodiments of the present invention, the software identifier indicates a binary version of the software.

In some embodiments of the present invention, the software identifier comprises sematic versioning information.

Storing semantic versioning information into the log, allows to track all modifications and releases in the software and facilitates identification of future updates needed to be performed.

Preferably, the software identifier comprises a Major version counter, a Minor version counter, and/or a Patch version counter, each counter being indicative of the updates to be performed.

This provides a robust way to indicate the nature of changes and updates performed so far, such as major changes with changes to the API, minor software updates and/or patches or bug fixes.

Preferably, each version counter is updated with every corresponding update performed.

In some embodiments of the present invention, updating the log comprises creating a new entry in the log, wherein the new entry comprises the software identifier of the received software update.

In some embodiments of the present invention, the method comprises further obtaining SE-related data, in particular, an identifier of a certified version of the software to be updated, and adding the SE-related data to the log.

In some embodiments of the present invention, the log is updated upon receiving from the operating system a notification indicating completion of the software update.

The OS itself, once the update is complete, will communicate with the update agent in order to store the defined information in the data storage of the update agent. In this way it is ensured that any performed update will be logged on.

In some embodiments of the present invention, the log is stored in a memory of the update agent. This way, when a new update is performed, this information will be kept at the update agent.

Preferably, each log entry is stored together with a time stamp, the timestamp indicating a time of the performed update. This allows for a time-dependent management of the log.

In some embodiments of the present invention, the method comprises further receiving at the update agent a request to clear the log, authenticating the request, and upon successful authentication, deleting log entries and/or the log. The requesting entity may be the external device, the mobile device, the operating system itself or any other applet or module on the mobile device the secure element is embedded on.

The authentication may be implemented using a signature-based verification scheme based on cryptographic keys between the secure element and the requesting entity.

Preferably, the request comprises a time indicator and log entries are deleted based on the corresponding timestamp and the time indicator. This allows for a removal of log entries in chronological order.

In some embodiments of the present invention, the method comprises further receiving at the update agent, from a requesting entity, a request to retrieve the log. Preferably, the request is received through a GET DATA APDU command. The update agent retrieves the log entries from the memory and provides the logs entries to the requesting entity. Optionally the retrieving request may be parameterized with a time parameter to indicate a past time period for which log entries are requested. The update agent retrieves those log entries whose time stamps do not exceed the specified time period.

Preferably, the log entries are retrieved from the update agent directly or through the update agent SD present in the OS.

Preferably, retrieving the log requires previous authentication of the requesting device through the update agent.

It has to be noted that all the devices, elements, units and means described in the present application could be implemented in software or hardware elements or combination thereof. All steps which are performed by the various entities described in the present application as well as the described functionalities are intended to mean that the respective entity is adapted to or configured to perform the respective steps and functionalities.

Further aspects, features and advantages of the present invention will become apparent to those of ordinary skills in the art upon reviewing the following detailed description of preferred embodiments and variants of the present invention in conjunction with the accompanying figures.

### BRIEF DESCRIPTION OF THE DRAWINGS

Reference will now be made to the accompanying figures, in which
- FIG. 1: shows the structure of a secure element, according to the present invention;
- FIG. 2: shows an exemplary structure of an installation package comprising a software image to be updated at the secure element of Fig. 1;
- FIG. 3: shows an OS update flow in a schematic view, illustrating consecutive updates of the log, according to an embodiment of the pre-sent invention;
- FIG. 4: shows flow charts of steps of the method according to preferred embodiments of the present invention.

### DETAILED DESCRIPTION

Detailed explanations of the present invention are given below with reference to attached drawings that illustrate specific embodiment examples of the present invention. These embodiments are described in sufficient detail to enable those skilled in the art to practice the invention. It is to be understood that the various embodiments of the present invention, although different, are not necessarily mutually exclusive. For example, a particular feature, structure, or characteristic described herein in connection with one embodiment may be implemented within other embodiments without departing from the scope of the present invention. In addition, it is to be understood that the position or arrangement of individual elements within each disclosed embodiment may be modified without departing from the scope of the present invention. The following detailed description is, therefore, not to be taken in a limiting sense, and the scope of the present invention is defined only by the appended claims, appropriately interpreted, along with the full range of equivalents to which the claims are entitled. In the drawings, like numerals refer to the same or similar functionality throughout the several views.

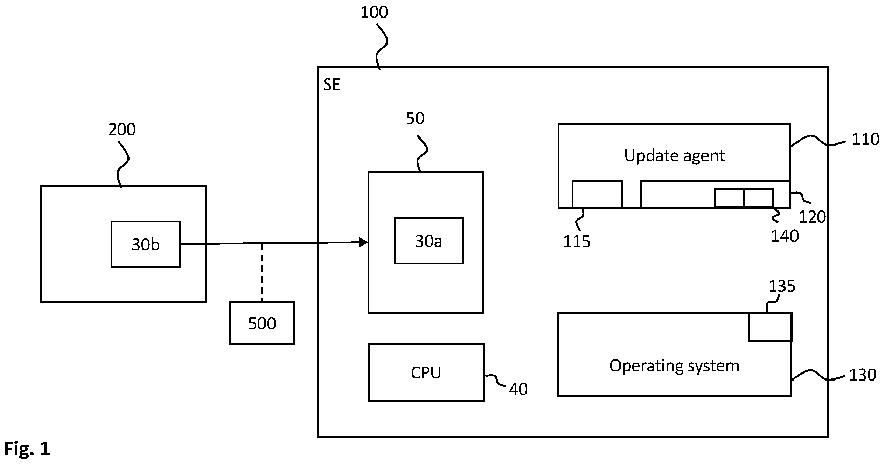

Fig. 1 shows the structure of a secure element SE 100 according to an embodiment.

The SE 100 shown in Fig. 1 is a tamper resistant element, TRE, containing an update agent 110, an operating system, OS, 130, and a processor, CPU, 40. Both the update agent 110 and the OS 130 may be stored in a memory 50 of the SE. The OS 130 and the update agent 110 are independent entities that can communicate with each other, for instance over an Application Programming Interface. Memory 50 is a non-volatile memory of the SE 100 in which software is stored, which is installed on the SE 100 and executable by the CPU 40.

The update agent 110 is a loader entity allowing the provisioning of software (such as, for instance, use case dependent firmware) within the SE. The update agent is the main entity in charge of loading software in the secure element, as well as any other procedure related to it (e.g., update, restore, roll-back). The update agent 110 is loaded onto the SE 100 during factory production of the SE.

In Fig. 1 software images to be loaded onto the SE 100 are referred to by reference numerals 30b, identifying an arbitrary software image, or an operating system image. The software image 30b represents a software update of the installed software or operating system 30a, and may be received from an external device or server 200, which is an entity that communicates with the SE 100.

The update agent 110 may contain a plurality of different memory structures or regions, to store sensible data thereon. A first memory structure 115 (which may, for example, be a memory structure of a non-volatile memory, such as of non-volatile memory 50 or of any other suitable memory) preferably contains authentication data, which is used by the update agent to authenticate and decrypt the software or OS image 30b when loaded or updated at a later time. Further, the authentication data is used by the update agent to authenticate any request received for retrieving, deleting and/or clearing the log. Preferably, the first memory structure 115 comprises security keys or private credentials, for example, to gain access to change the firmware or to authenticate access for another application such as eSIM and other applications needed protected security keys. Only the update agent 110 has access to the memory region 115.

A second memory structure 120, which is accessible both by the update agent 110 and the operating system 130 (the operating system 130 will access the second memory structure 120 through the API), may contain the personalization data of the OS, that is, the OS credentials 135. These credentials are loaded onto the SE 100 together with the loading of the update agent 110 during factory production, and are stored in the second memory 120 of the update agent 110.

The update agent 110 further comprises a log 140, configured to track updates performed on software components of the secure element 100. The log 140 may be any suitable data structure or memory structure on the secure element, located at the update agent 110, preferably in a non-volatile memory region of the memory 50. In a preferred embodiment, as depicted in Fig. 1, the log 140 is located within the second memory structure 120 of the update agent 110. Storing the log in the second memory structure 200 at the update agent 110, allows the operating system to access the log, for example through an API between the update agent 110 and the operating system.

An update of a software image, such as an OS image, may be initiated by an external device 200. The external device (off-card device) 20 may describe an entity which is in control and communicates with the SE 100. It can be a LPA (Local Profile Assistant), a terminal, or whatever (mobile) device it is that the SE is mounted on.

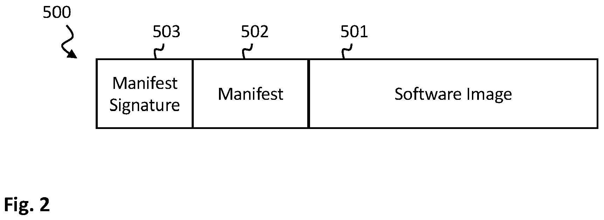

The SE 100 receives the (new) software image 30b in form of an installation package 500, whose general structure is illustrated in Fig. 2 in an exemplary and non-limiting way. However, it should be born in mind that the installation package may also have any other suitable form, for example without using a manifest signature and a manifest.

With reference to Fig. 2, an exemplary and non-limiting installation package 500 carries the software image together with further information and metadata to ensure integrity and authentication at the SE. In particular, the installation package 500 comprises the software image 501 of a software 30a to be updated at the SE 100. Prepended to the software image 501 is a manifest 502. The manifest 502 contains information pertaining to the new software image to be uploaded and is used to ensure the image is acceptable and the issuer is trusted.

In particular, the manifest 502 contains an identifier of the version of the software image 501. This is one of the identifiers that are contained in both the manifest of the software update flow and in the software image itself. The identifier may contain sematic versioning information such as a Major version, a Minor version, and/or a Patch version.

Generating the installation package 500 at the external device may comprise further steps, such as encryption and signature protection. For instance, an optional manifest signature 503 may be contained in the installation package 500, indicating a signature used to protect the entire manifest package 502. For example, such an optional manifest signature 503 may be used in specific cases such as a corresponding update agent using it but may not be needed in connection to OFL. The secure element upon receiving the installation package may verify the package signature using a session key stored at the secure element. Any known approaches to integrity verification and authentication may be used therefore. Integrity verification and authentication at the SE are outside the scope of this invention. It is assumed that the SE respectively the update agent is configured in such a way to perform these steps in conventional way.

The update agent extracts from the installation package 500 the software image 501 for performing the updates, and from the manifest 502 the update-related data for being stored in the log 140.

The software or OS update is performed on the secure element 100, whereas after the execution of the update, update-related data is being stored within the log 140 onto the secure element 100, to allow tracking of the updates.

The information stored in the log 140 for keeping track of software and/or OS updates comprises, without being limited to:
- Software/OS binary version: this is the identifier of the software/OS versions for the specific product according to the update agent's update flow. This is one of the identifiers that are contained in both the manifest of the software/OS update flow and in the existing software/OS itself, and includes Major Version, Minor Version and Patch Version.
- TOE information: this is the identifier of the certified version of the software/OS on which the OS from the update is based.

The operating system 130 itself, once the update is complete, will communicate with the update agent 110 in order to store the defined information in the log 140 of the update agent 110. This ensure, that every time a new update is performed, the update-related information will be securely stored within the secure element 100, allowing future tracking of all updates performed on software at the secure element.

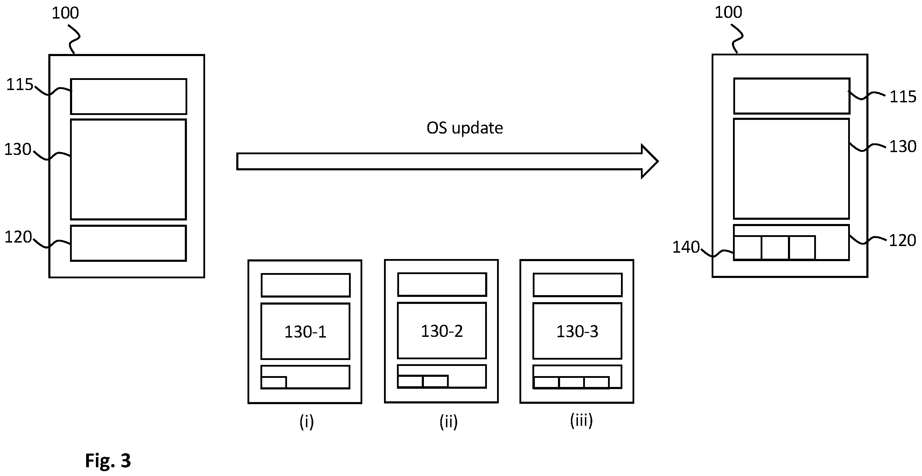

Fig. 3 shows an OS update flow in a schematic view, illustrating consecutive updates of the log 140, according to an embodiment of the present invention.

The flow scheme illustrates three operating system updates (i - ii - iii) performed on the secure element 100. With each update a new entry in the log 140 is created and stored in the memory 120 at the update agent.

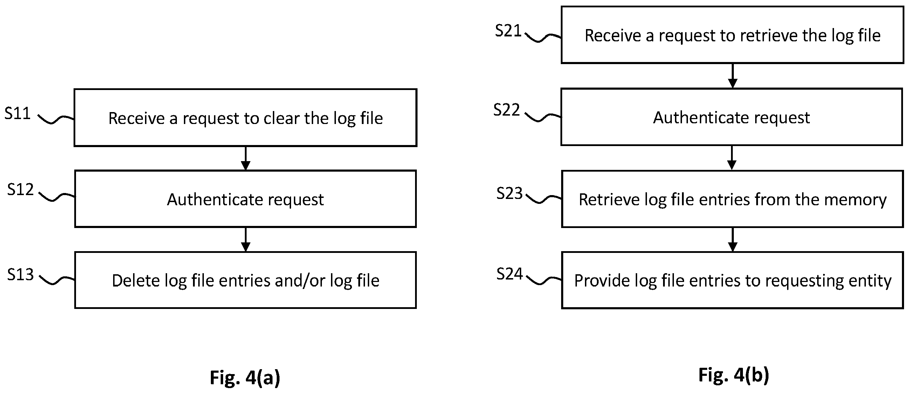

Fig. 4 shows flow charts of steps according to preferred embodiments of the present invention.

A log and/or log entries stored at the update agent can be deleted or otherwise modified. Fig. 4(a) shows a flow chart of implementing steps for deleting log entries at an update agent, according to a preferred embodiment.

In a first step S11, a request to clear a log is received at the update agent. The request may be sent by the external device 200, or any other applications located on the mobile device, respectively the secure element. Alternatively, the request may be sent by the operating system OS 130 itself. The request may identify log entries to be deleted by indicating a time period, whereas log entries are deleted according to their time stamps falling within the indicated time period. Alternatively, the request may indicate the deletion of the entire log. Completely clearing the log is expected to be needed only in cases in which a full OS replacement in the field is performed on a device, in which case keeping previous logging would not provide any value.

The update agent 110 authenticates the request in step S12, to ensure that the log is not inadmissible/unauthorized deleted, and proceeds in step S13 with deleting the log form the memory.

The authentication may be implemented using a signature-based verification scheme based on cryptographic keys between the secure element and the requesting entity.

Logs stored at the update agent can be directly retrieved through specific APDU commands, such as GET DATA. Fig. 4(b) shows a flow chart of implementing steps for retrieving log entries stored at the update agent, according to a preferred embodiment of the invention.

In a step S21 a request to retrieve the log 140 is received at the update agent 110. The request is sent by a receiving entity, preferably through a GET DATA APDU command. The receiving entity may be the external device 200, or any other app located on the mobile device or at the secure element 100, that may need the logs for analyses and/or statistic purposes. The update agent 110 retrieves in step S23 the log entries from the memory 120 and provides the same in step S24 to the requesting entity.

As with the request for clearing logs, the request for retrieving the log may require previous authentication (step S22 in Fig. 4(b)) of the requesting device by the update agent. The authentication may be implemented using a signature-based verification scheme based on cryptographic keys between the secure element and the requesting entity.

Optionally the retrieving request may be parameterized with a time parameter to indicate a past time period for which log entries are requested. The update agent retrieves then those log entries whose time stamps do not exceed the specified time period and provides the same to the requesting entity.

The aspects and embodiments described herein provide an efficient and secure solution for managing and logging software updates at an update agent on the secure element itself. Several advantages are therewith provided, such as:
- The OS itself triggers the storage of the version of the new software/OS once the update is finished, allowing thus to keep track of any software update performed.
- The off-card entity is no longer responsible of knowing all the updates that have been performed on a certain secure element.
- The log of the performed updates can be retrieved easily through a GET DATA command.
- At least two different OS identifiers are kept, containing the product OS version, from which the kind of update between two performed updates can be retrieved, and the ID corresponding to the certified OS in which the update is based.
- The log entries allow to analyze past updates for determining when new updates are necessary, for detecting incompatibilities between various update versions and/or for any statistical purposes.

In the foregoing specification, the invention has been described with reference to specific embodiments thereof. It will, however, be evident that various modifications and changes may be made thereto without departing from the broader scope of the invention. For example, the above-described process flows are described with reference to a particular ordering of process actions. However, the ordering of many of the described process actions may be changed without affecting the scope or operation of the invention. The specification and drawings are, accordingly, to be regarded in an illustrative rather than restrictive sense.

## Claims

1. A method for managing software updates on a secure element, SE, the secure element (100) comprising an update agent (110) and an operating system (130), the method comprising the steps performed by the update agent (110):
- receiving from an external device (200) an installation package (500) comprising a software image (501) of a software to be updated onto the secure element (100);
- extracting update-related data from the installation package (500);
- performing a software update based on the software image (501); and
- updating a log (140) on the secure element (100) based on the update-related data.

2. The method according to claim 1, wherein (i) the operating system (130) of the secure element (100) comprises a software identifier indicative of the software to be updated on the secure element (100); and/or
(ii) wherein the installation package (500) comprises the software image (501) and a manifest (502), wherein the update-related data comprises a software identifier extracted from the manifest (502) indicative of the software on the secure element (100) to be updated.

3. The method according to claim 2, wherein the software identifier is contained in (i) the operating system (130) and/or (ii) the manifest (502), as well as in the software to be updated on the secure element (100).

4. The method according to claim 2 or 3, wherein the software identifier indicates a binary version of the software.

5. The method according to any one of claims 2 to 4, wherein the software identifier comprises sematic versioning information.

6. The method according to claim 5, wherein the software identifier comprises a Major version counter, and/or a Minor version counter, and/or a Patch version counter, each counter being indicative of the performed updates.

7. The method according to any one of claims 1 to 6, wherein updating the log (140) comprises creating a new entry in the log (140), wherein the new entry comprises the software identifier.

8. The method according to claim 7, further comprising obtaining SE-related data, in particular, an identifier of a certified version of the software to be updated, and adding the SE-related data to the log (140).

9. The method according to any one of claims 1 to 8, wherein the log (140) is updated upon receiving from the operating system (130) a notification indicating completion of the software update.

10. The method according to any one of claims 1 to 9, wherein the log (140) is stored in a memory (120) of the update agent (110).

11. The method according to claim 10, wherein each log entry is stored together with a time stamp, the timestamp indicating a time the software update was performed.

12. The method according to any one of claims 1 to 11, further comprising
- receiving (S11) a request to clear the log (140);
- authenticating (S12) the request; and
- upon successful authentication, deleting (S13) log entries and/or the log (140).

13. The method according to any one of claims 1 to 12, further comprising
- receiving (S21), from a requesting entity, a request to retrieve the log (140), preferably through a GET DATA APDU command;
- retrieving (S22) the log entries from the memory (120); and
- providing (S23) the logs entries to the requesting entity.

14. An update agent (110) for managing software updates on a secure element (100), the update agent (110) comprising a memory (120) and being configured to:
- receive from an external device (20) an installation package (500) comprising a software image (501) of a software to be updated onto the secure element (100);
- extract update-related data from the installation package (500);
- perform a software update based on the software image; and
- update a log (140) stored in the memory (120) by creating a new entry based on the update-related data.

15. The update agent (110) according to claim 14, further configured to carry out the method according to any one of claims 2 to 13.
